(19) Europäisches Patentamt / European Patent Office / Office européen des brevets

(11) **EP 4 371 940 B1**

(12) **EUROPEAN PATENT SPECIFICATION**

(45) Date of publication and mention
of the grant of the patent:
**14.01.2026   Bulletin 2026/03**

(21) Application number: **23207937.6**

(22) Date of filing: **06.11.2023**

(51) International Patent Classification (IPC):
*C01D 1/40* $^{(2006.01)}$    *C01D 15/02* $^{(2006.01)}$
*C01D 15/08* $^{(2006.01)}$    *C22B 3/04* $^{(2006.01)}$
*C22B 26/12* $^{(2006.01)}$    *C25C 1/02* $^{(2006.01)}$
*C25C 7/02* $^{(2006.01)}$    *C25C 7/04* $^{(2006.01)}$
*H01M 10/54* $^{(2006.01)}$    *H01M 4/58* $^{(2010.01)}$
*C25C 7/08* $^{(2006.01)}$

(52) Cooperative Patent Classification (CPC):
**C25C 7/04; C01D 1/40; C01D 15/02; C01D 15/08;
C22B 3/045; C22B 26/12; C25C 1/02; C25C 7/02;
H01M 4/5825; H01M 10/54;** C25C 7/08;
Y02W 30/84

(54) **SYSTEM OF RECOVERING LITHIUM PRECURSOR AND METHOD OF RECOVERING LITHIUM PRECURSOR**

SYSTEM ZUR RÜCKGEWINNUNG EINES LITHIUMPRÄKURSORS UND VERFAHREN ZUR RÜCKGEWINNUNG EINES LITHIUMPRÄKURSORS

SYSTÈME DE RÉCUPÉRATION DE PRÉCURSEUR DE LITHIUM ET PROCÉDÉ DE RÉCUPÉRATION DE PRÉCURSEUR DE LITHIUM

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.11.2022   KR 20220155832**

(43) Date of publication of application:
**22.05.2024   Bulletin 2024/21**

(73) Proprietor: **SK Innovation Co., Ltd.
Seoul 03188 (KR)**

(72) Inventors:
• **HONG, Suk Joon**
**34124 Yuseong-gu, Daejeon, (KR)**
• **BAE, Hyun Tae**
**34124 Yuseong-gu, Daejeon, (KR)**
• **KIM, Ji Min**
**34124 Yuseong-gu, Daejeon, (KR)**
• **LEE, Sang Ick**
**34124 Yuseong-gu, Daejeon, (KR)**
• **LEE, In Ae**
**34124 Yuseong-gu, Daejeon, (KR)**

(74) Representative: **Lorenz Seidler Gossel Part. mbB
Widenmayerstr. 23
80538 München (DE)**

(56) References cited:
• XU JING ET AL: "A green and sustainable
strategy toward lithium resources recycling from
spent batteries", vol. 8, no. 40, 5 October 2022
(2022-10-05), US, pages 1 - 12, XP093147522,
ISSN: 2375-2548, Retrieved from the Internet
<URL:https://www.science.org/doi/pdf/10.1126/
sciadv.abq7948> DOI: 10.1126/sciadv.abq7948
• PRABAHARAN G. ET AL: "Electrochemical
process for electrode material of spent lithium
ion batteries - ScienceDirect", vol. 68, 12 July
2017 (2017-07-12), pages 527 - 533,
XP093146470, Retrieved from the Internet
<URL:https://www.sciencedirect.com/science/
article/pii/S0956053X17304993?
casa_token=blqkv0EO65UAAAAA:poOu_uVSH_
HWVnbqfQh7pfHaUY4cQmgTJ_bTCEkqZCmh8v
qu8EDWztML-HgxmOKqhef2X0INrQw#f0045>
[retrieved on 20240320], DOI: https://doi.org/
10.1016/j.wasman.2017.07.007

EP 4 371 940 B1

**Description**

BACKGROUND

1. Field

The invention described in this patent application relates to a system of recovering a lithium precursor and a method of recovering a lithium precursor. More particularly, the invention relates to a system of recovering a lithium precursor from a cathode active material and a method of recovering a lithium precursor from a cathode active material.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Examples of the secondary battery include a lithium secondary battery, a nickel-cadmium battery, a nickel-hydrogen battery. The lithium secondary battery is widely developed and applied due to high operational voltage and energy density per unit weight, a high charging rate, a compact dimension, etc.

The lithium secondary battery may include an electrode assembly including a cathode, an anode and a separator, and an electrolyte solution impregnating the electrode assembly. The lithium secondary battery may further include an exterior material in the form of, e.g., a pouch, that accommodates the electrode assembly and the electrolyte solution.

A lithium composite oxide may be used as a cathode active material for the lithium secondary battery. The lithium composite oxide may contain a valuable metal. As demands of the lithium secondary battery and concerns of environmental pollution are being increased, recycling methods of the cathode active material are researched.

A method for recovering a lithium precursor from a cathode active metal of a lithium secondary battery is disclosed in Xu et al., Sci. Adv. 8, eabq7948 (2022). A method for recovering other metals from electrode materials of lithium secondary batteries is disclosed in Prabaharan et al., Waste Management (2017), vol. 68, pp. 527-533.

SUMMARY

The present invention is set out and defined by the appended set of claims. An aim of the present invention is to provide a method of recovering and a system of recovering a lithium precursor from a cathode active material of a lithium secondary battery with improved productivity and efficiency.

Against this background, the invention relates to a method of recovering a lithium precursor from a cathode active material of a lithium secondary battery, the method comprising: providing a first electrode to include the active material, and a second electrode. The first electrode and the second electrode are immersed in a first reaction solution in a first reaction vessel and a second reaction solution in a second reaction vessel, respectively. A voltage or a current is applied to the first electrode and the second electrode to recover a lithium precursor from the active material. The first reaction vessel serves as an oxidation unit, and the second reaction vessel serves as a reduction unit. The first reaction vessel and the second reaction vessel are connected to each other by a connection portion including an ion exchange membrane therein. The first electrode includes an active material storing portion at one end thereof in which the active material is accommodated. The providing the first electrode includes preparing the first electrode to contain the active material in the active material storing portion.

In some embodiments, the active material storing portion may have a pouch shape or a basket shape.

In some embodiments, the active material storing portion may be formed of a carbon felt.

In some embodiments, the first electrode may include an electrode bar connected to the active material storing portion.

In some embodiments, the first reaction solution may include a lithium ion-containing aqueous solution, and the second reaction solution may include water or a lithium ion-containing aqueous solution.

In some embodiments, the ion exchange membrane may include at least one of Nafion, Diaion and Trilite.

In some embodiments, the active material comprises lithium iron phosphate.

In some embodiments, lithium ions separated from the active material may move to the second reaction vessel to be collected as lithium hydroxide.

In some embodiments, the lithium precursor may be recovered through an electrochemical reaction without using an additional additive such as a precipitating agent, an oxidizing agent or a reducing agent. Therefore, yield and productivity of a recovery process may be improved without causing environmental pollution.

In some embodiments, the active material may be accommodated at an inside of an electrode, or in another embodiment which does not fall in the scope of the claims it may be coated on a surface of the electrode to be introduced into a reaction solution. Therefore, application of an electrical energy to the cathode active material may be performed directly to promote the electrochemical reaction. Additionally, lithium ions may be quickly separated from the cathode active material and iron phosphate may be efficiently recovered.

Against the background initially described, the invention further relates to a system for recovering a lithium precursor from a cathode active material of a lithium secondary battery, the active material comprising lithium iron phosphate, the system comprising: a first reaction vessel comprising a first reaction solution and a first electrode containing an active material therein immersed in the first reaction solution; a second reaction vessel comprising a second reaction solution and a second electrode immersed in the second reaction solution; a connecting portion connecting the first reaction vessel and the second reaction vessel and including an ion exchange membrane therein; and a power source configured to apply a voltage to the first electrode and the second electrode. The system is configured such that, when a voltage is applied to the first electrode and the second electrode to recover a lithium precursor from the active material, the first electrode acts as an oxidizing electrode (anode) and the second electrode acts as a reducing electrode (cathode). The first electrode comprises an active material storing portion at one end thereof in which the active material is accommodated.

In some embodiments, the system is configured to carry out a method of the invention.

The lithium precursor recovered according to a method of the present invention may be reused for a cathode active material and a lithium secondary battery. The lithium secondary battery may be widely applied in green technology fields such as an electric vehicle, a battery charging station, a solar power generation, a wind power generation, etc., using a battery. The lithium secondary battery may be used for eco-friendly electric vehicles and hybrid vehicles to prevent a climate change by suppressing air pollution, greenhouse gas emission, etc.

BRIEF DESCRIPTION OF THE DRAWINGS

FIG. 1 is a schematic cross-sectional view illustrating a system of recovering a lithium precursor in accordance with example embodiments according to the invention.

FIG. 2 is a schematic cross-sectional view illustrating a comparative system, which does not fall in the scope of the appended set of claims, of recovering a lithium precursor.

FIG. 3 is a schematic cross-sectional view illustrating a first electrode included in a system of recovering a lithium precursor in accordance with FIG. 2.

DETAILED DESCRIPTION OF THE EMBODIMENTS

According to embodiments of the present invention, a method of recovering a lithium precursor by an electrochemical reaction (hereinafter, which may be abbreviated as a recovery method) is provided. According to embodiments of the present invention, a system of recovering a lithium precursor (hereinafter, which may be abbreviated as a recovery system) capable of implementing the inventive recovery method is also provided.

Hereinafter, embodiments of the present invention will be described in detail with reference to examples and the accompanying drawings.

The term "lithium precursor" as used herein refers to a compound containing lithium and suitable to provide the lithium for making an electrode active material.

Examples comprise lithium hydroxide (LiOH) or lithium carbonate ($Li_2CO_3$).

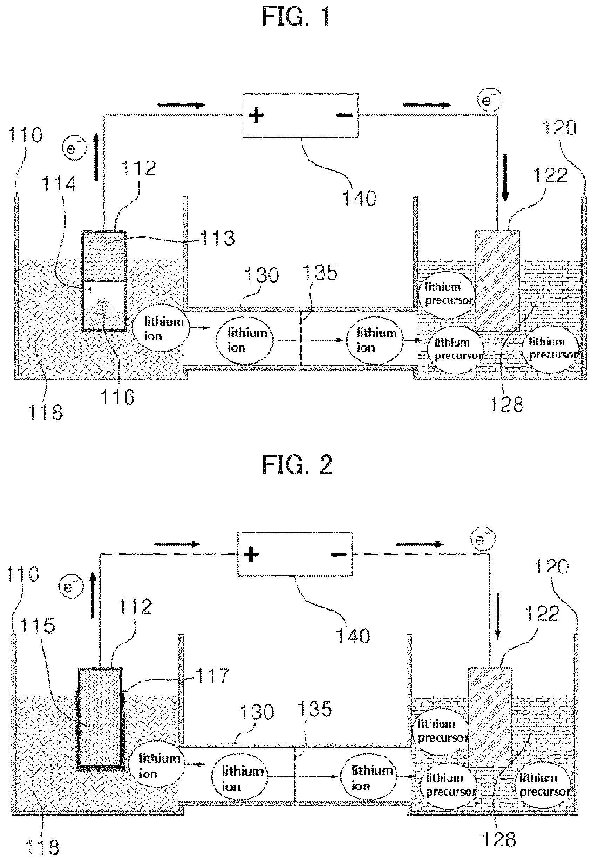

FIG. 1 is a schematic cross-sectional view illustrating a system of recovering a lithium precursor in accordance with example embodiments. For example, the lithium precursor recovery method according to embodiments of the present invention may be implemented using the system of FIG. 1.

Hereinafter, the recovery method of the lithium precursor will also be described with reference to FIG. 1.

Referring to FIG. 1, the recovery system includes a first electrode 112 and a second electrode 122. The first electrode 112 and the second electrode 122 are introduced into a first reaction vessel 110 and a second reaction vessel 120, respectively.

The first electrode 112 serves as an oxidizing electrode, and the second electrode 122 serves as a reducing electrode.

An active material 116 for recovering a lithium precursor is introduced in the first electrode 112. The active material 116 includes a cathode active material obtained from a used lithium secondary battery (e.g., a waste lithium secondary battery).

The lithium secondary battery may include an electrode assembly including a cathode, an anode and a separator interposed between the cathode and the anode. The cathode and anode may include a cathode active material layer and an anode active material layer coated on a cathode current collector and an anode current collector, respectively.

The cathode active material layer for the recovery system includes and for the recovery method may include lithium iron phosphate (e.g., $LiFePO_4$) as the cathode active material.

The cathode active material may be recovered by separating a cathode from a waste lithium secondary battery. As described above, the cathode may include the cathode current collector (e.g., aluminum (Al)) and the cathode active material layer, and the cathode active material layer may include a conductive material and a binder together with the cathode active material.

The conductive material may include, e.g., a carbon-based material such as graphite, carbon black, graphene or a carbon nanotube. The binder may include a resin material, e.g., vinylidene fluoride-hexafluoropropylene copolymer (PVDF-co-HFP), polyvinylidenefluoride (PVDF), polyacrylonitrile, polymethyl methacrylate, etc.

In example embodiments, the cathode active material may be recovered by pulverizing the recovered cathode. Accordingly, the cathode active material may be recovered as a powder in the form of, e.g., a black powder. In an embodiment, the cathode active material may be recovered in the form of a scrap by peeling the cathode active material layer from the cathode current collector.

The recovered cathode active material for the recovery system includes and for the recovery method may include lithium iron phosphate as described above. In some embodiments, the recovered cathode active material may include the conductive material and/or the binder.

In some embodiments, the recovered cathode active material may be heat-treated prior to an introduction into the recovery system. Impurities such as the conductive material and the binder may be removed or reduced, and a high-purity cathode active material may be introduced into the recovery system.

The cathode active material applied to the recovery system, according to embodiments of the present invention, includes lithium iron phosphate, but may also contain, for example, a nickel-based cathode active material. The recovery method according to embodiments of the present invention is not limited to lithium iron phosphate, and the recovery method may also be applied to, for example, a nickel-based cathode active material.

However, from aspects of a voltage or a standard reduction potential applied to induce an electrochemical reaction, the recovery method and recovery system may be effectively applied to an active material containing lithium iron phosphate.

Therefore, hereinafter, embodiments in which the active material 116 includes lithium iron phosphate will be described in detail.

The first electrode 112 includes an active material storing portion 114 at one end capable of accommodating the active material 116 therein. The first electrode 112 may include an electrode bar 113 connected to the active material storing portion 114. For example, the active material storing portion 114 may be integrally connected to an end of the electrode bar 113.

The electrode bar 113 may have a solid structure, and the active material storing portion 114 may have a hollow structure including a space for accommodating the active material 116.

In a non-limiting example, the active material storing portion 114 may have a pouch shape or a basket shape.

The active material storing portion 114 may easily form the hollow structure, and may include a material or a structure that may promote transfer of electrons (e-) separated by an oxidation reaction of the active material 116. In example embodiments, the active material storing portion 114 may have a mesh structure, a felt structure, or a knit structure.

In some embodiments, the active material storing portion 114 may be formed of a carbon felt.

The electrode bar 113 may be formed of a metallic material or a carbon-based material (e.g., a graphite electrode) capable of inducing or promoting the oxidation reaction.

In some embodiments, the electrode bar 113 and the active material storing portion 114 may be formed using the carbon-based material.

The second electrode 122 serves as an opposing electrode to the first electrode 112.

In a non-limiting example, the second electrode 122 may have a bar shape that has an solid structure entirely.

The second electrode 122 may include a metal or a transition metal that may promote a reduction reaction to obtain electrons (e-). For example, the second electrode 122 may include at least one of copper, nickel, titanium, aluminum and an alloy thereof. In an embodiment, the second electrode 122 may include a carbon-based electrode.

As described above, the first electrode 112 and the second electrode 122 are introduced into the first reaction vessel 110 and the second reaction vessel 120, respectively. A first reaction solution 118 and a second reaction solution 128 are included in the first reaction vessel 110 and the second reaction vessel 120, respectively.

The first electrode 112 and the second electrode 122 are immersed into the first reaction solution 118 and the second reaction solution 128, respectively.

In some embodiments, the first electrode 112 and the second electrode 122 may be partially immersed into the first reaction solution 118 and the second reaction solution 128, respectively. For example, 10% to 90% of a total volume of each of the first electrode 112 and the second electrode 122 may be impregnated into the first reaction solution 118 and the second reaction solution 128.

In some embodiments, 20% to 70%, or 40% to 60% of the total volume of each of the first electrode 112 and the second electrode 122 may be impregnated. Within the above range, transfer of electrons and/or lithium ions and the oxidation/reduction reaction rate in each reaction vessel 110 and 120 occurring by applying voltage or current, which will be described later, may be promoted.

In some embodiments, the active material storing portion 114 included in the first electrode 112 may be entirely immersed in the first reaction solution 118, and the electrode bar 113 may be partially immersed in the first reaction solution 118.

The first reaction solution 118 may include a lithium ion ($Li^+$)-containing aqueous solution. The lithium ion-containing aqueous solution may serve as an aqueous electrolyte solution. The second reaction solution 128 may include water or a lithium ion-containing aqueous solution.

The recovery system includes a connection portion 130 that connects the first reaction vessel 110 and the second reaction vessel 120 to each other.

An ion exchange membrane 135 is disposed within the connection portion 130. In some embodiments, the ion exchange membrane 135 may include an ion exchange resin capable of selectively moving cations.

The ion exchange membrane 135 may include, e.g., an ion exchange resin such as Nafion, Diaion, Trilite, etc., and may preferably include Nafion.

The recovery system includes a power source 140. The first electrode 112 and the second electrode 122 are electrically connected to each other through the power source 140 and an external conductor.

A voltage or a current is directly applied between the first electrode 112 and the second electrode 122 by the power source 140. The voltage to the first electrode and the second electrode effects a current flow through the first electrode and the second electrode. Accordingly, an electrochemical reaction may be promoted in the recovery system, and a redox reaction may be induced.

The applied voltage may be set in consideration of a standard reduction potential value in the oxidation and reduction reactions. The standard reduction potential refers to a potential measured in a battery constructed by combining a standard hydrogen electrode and a half cell where the reduction occurs.

The recovery system may be operated in a similar manner to that of an electrolytic cell. Reactions that may occur in the recovery system may be represented by Reaction Schemes 1 to 3 below.

[Reaction Scheme 1]        $Li^+ (aq) + e^- + FePO_4 (s) \leftrightarrow LiFePO_4(s)$, $E^o(V) = 0.46$

[Reaction Scheme 2-1]        $Li^+ (aq) + H_2O (l) \leftrightarrow LiOH (aq) + H^+ (aq)$

[Reaction Scheme 2-2]        $2LiOH (aq) + CO_2 (g) \leftrightarrow Li_2CO_3 (aq) + H_2O (l)$

[Reaction Scheme 3]        $O_2 (aq) + 4H^+ (aq) + 4e^- \leftrightarrow 2H_2O (l)$, $E^o(V) = 1.23$, $E(V) = 1.23 - 0.059 \times pH$

An oxidation reactions occurs at the first electrode 112, and a reduction reaction occurs at the second electrode 122. The oxidation reaction is defined as a reaction that loses an electron, and the reduction reaction is defined as a reaction that gains an electron.

A reverse reaction (the oxidation reaction) of Reaction Scheme 1 may occur at the first electrode 112, and a forward reaction (the reduction reaction) of Reaction Scheme 3 may occur at the second electrode 122. The applied voltage or current may be set to reflect a difference between standard reduction potential values of Reaction Scheme 1 and Reaction Scheme 3, and may be set to reflect a pH of the solution.

The $E^o$ value in Reaction Scheme 1 and Reaction Scheme 3 may refer to the standard reduction potential in the forward reaction of each Reaction Scheme. The E value in Reaction Scheme 3 may refer to the reduction potential according to the pH of the second reaction solution 128.

For example, the second reaction solution 128 may include a lithium ion-containing aqueous solution and may have a pH of 10. In this case, the E value in Reaction Scheme 3 may be 0.64 (=1.23-0.059×10), and a voltage of 0.3V to 1.0V, or 0.4V to 0.8V may be applied to the recovery system through the power source 140.

An electrochemical reaction may be induced in the above voltage range. For example, if the applied voltage is less than 0.3V, the electrochemical reaction may not be induced because the voltage for the redox reaction may not be sufficient. If the applied voltage exceeds 1.0V, an excess amount of electrical energy may be used and consumed without promoting the redox reaction, which may degrade energy efficiency and reduce productivity.

In some embodiments, the lithium ions ($Li^+$) separated from the active material 116 may be transferred to the second reaction vessel 120 to be collected as a lithium precursor, e.g., lithium hydroxide (LiOH) or lithium carbonate ($Li_2CO_3$)

As expressed in the reverse reaction of Reaction Scheme 1, the oxidation reaction occurs in the first electrode 112 to separate the lithium ions ($Li^+$) and electrons ($e^-$).

The generated lithium ions (Li$^+$) may be dissolved in the first reaction solution 11, and may exist in a state of an aqueous solution. As described above, the first reaction solution 118 may include the lithium ion-containing aqueous solution. The lithium ion-containing aqueous solution may function as an aqueous electrolyte solution. The dissolved lithium ions may be transferred in the first reaction solution 118, and may also be transferred the connection portion 130.

The lithium ions may also pass through the ion exchange membrane 135. Cations may be selectively pass through the ion exchange membrane 135, and thus only the lithium ions (Li$^+$) may be transferred while limiting movement of solvent (e.g., water (H$_2$O)).

For example, when the voltage or the current is applied through the power source 140, the oxidation reaction may occur at the first electrode 112, so that the lithium ions (Li$^+$) may be dissolved in the first reaction solution 118, and the separated electrons (e-) may move toward the second reaction vessel 120 through the external conductor connected to the power source 140. To maintain an electrical neutrality of the recovery system, the lithium ions (Li$^+$) may move from the first reaction vessel 110 to the second reaction vessel 120 through the connection portion 130 and the ion exchange membrane 135.

As described above, the second reaction solution 128 may include water or the lithium ion-containing aqueous solution. The recovery system may be operated in an air. In the second reaction solution 128, gaseous carbon dioxide (CO$_2$) present in the air may be dissolved, and carbon dioxide (CO$_2$) may be present in a state of an aqueous solution.

The lithium ions transferred to the second reaction vessel 120 may react with the second reaction solution 128. In the second reaction vessel 120, the forward reaction of Scheme 2-1 and/or the forward reaction of Scheme 2-2 may occur. Within the second reaction vessel 120, the lithium ions may be converted into a lithium precursor by the forward reactions, and the lithium precursor may be collected within the second reaction vessel 120.

The electrons (e-) separated by the oxidation reaction at the first electrode 112 may move from the first electrode 112 to the second electrode 122 by an influence of the voltage or the current applied from the power source 140. The electrons (e-) and hydrogen ions (H$^+$) generated and dissolved by the forward reaction of Reaction Scheme 2-1 may cause the forward reaction (reduction reaction) of Reaction Scheme 3.

The lithium precursor may be recovered by the forward reaction of Reaction Scheme 2-1 and/or Reaction Scheme 2-2.

The recovery method performed by applying the recovery system may further include drying the second reaction solution 128. In this case, a lithium precursor powder may be recovered.

The lithium ions (Li$^+$) and electrons (e-) may be separated by the reverse reaction of Reaction Scheme 1, iron phosphate (FePO$_4$) derived from the active material 116 may remain in the active material storing portion 114. For example, iron phosphate (FePO$_4$) may remain in a solid state. Therefore, the above-described recovery system may also efficiently recover iron phosphate (FePO$_4$).

An additional additive such as a precipitating agent, an oxidizing agent and a reducing agent may not be used in the above-described recovery system. Additionally, the recovery system may be operated using only an electrical energy and may not cause environmental pollution.

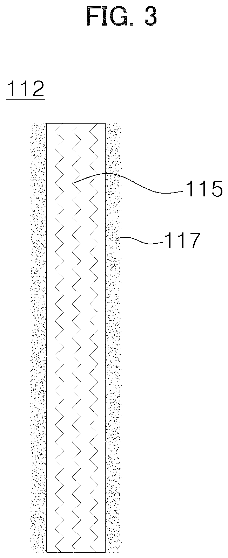

FIG. 2 is a schematic cross-sectional view illustrating a comparative system, which does not fall in the scope of the claims, of recovering a lithium precursor. FIG. 3 is a schematic cross-sectional view illustrating the first electrode 112 included in this system.

Detailed descriptions on elements and operations substantially the same as or similar to those described with reference to FIG. 1 are omitted herein. For example, detailed descriptions of the active material, the second electrode 122 and the mechanism of the redox reaction occurring in the recovery system are omitted.

Referring to FIGS. 2 and 3, the first electrode 112 may have a shape of a single electrode bar 115. For example, the active material storing portion 114 described with reference to FIG. 1 may be omitted from the first electrode 112.

For example, an oxidation reaction may occur in the first electrode 112, and the electrode bar 115 is formed of a metal material (e.g., aluminum (Al)) or a carbon-based material capable of inducing or promoting the oxidation reaction.

In some embodiments, which does not fall in the scope of the claims, an active material 117 may be coated on a surface of the first electrode 112. In an embodiment, which does not fall in the scope of the claims, the active material 117 may be directly coated on the electrode bar 115 in the first electrode 112. The 'direct coating' may refer to a case that any further material is not formed between the active material 117 and the surface of the first electrode 112.

Electrons (e-) separated from the active material 117 may be transferred via the first electrode 112. The active material 117 may be directly coated on the surface of the first electrode 112, so that the electrons (e-) may be generated intensively through the first electrode 112.

The active material 117 may at least partially cover the surface of the first electrode 112. For example, the active material 117 may be continuously and uniformly distributed on the surface of the first electrode 112 and may exist in the form of a film covering at least a portion of the surface. In this case, a contact area between the active material 117 and the first electrode 112 may be increased so that transfer of the electrons (e-) separated from the active material 117 may be facilitated through the external conductor, and the redox reaction may be further promoted. Thus, the recovery rate of the lithium precursor may be improved.

In some embodiments, which does not fall in the scope of the claims, the active material 117 may be discontinuously distributed on the surface of the first electrode 112. For example, the active material 117 may exist in the form of an island in a local area of the outer surface of the first electrode 112.

The active material may be formed using a coating method well known in the related art. For example, the active material 117 may be applied to the surface of the first electrode 112 as a thin film shape in a slurry state.

Hereinafter, preferred embodiments are proposed to more concretely describe the present invention.

Examples and Comparative Examples

Example 1

A first reactor immersing a first electrode which was a carbon electrode having a pouch-shaped space formed therein was installed. A carbon felt electrode as a second electrode was impregnated into the second reactor.

A power source was connected to both impregnated electrodes, and the first reactor and the second reactor were connected, and an ion exchange membrane containing Nafion was disposed between the reactors.

0.5 g of lithium iron phosphate (LiFePO$_4$) was provided as a waste cathode active material, and introduced into an active material storing portion in the first reactor. The first reactor was filled with a 0.1M lithium hydroxide (LiOH) solution impregnating the first electrode, and the second reactor was filled with distilled water impregnating the second electrode.

Thereafter, a current of 10 mA was applied to the power source connected to the first electrode and the second electrode, and a electrochemical reaction proceeded for 4 hours.

Example 2

An electrochemical reaction proceeded by the same method as that in Example 1, except that a current of 20 mA was applied.

Comparative Example

10 g of a phosphorus-based cathode active material powder containing LiFePO$_4$ with a lithium content of 4.4 wt%, 1000 ml of 0.2 mol/L phosphoric acid aqueous solution, and 0.1 g of an iron powder with an average particle size of 30 $\mu$m were placed in a reactor and stirred at room temperature for 4 hours to be dissolved therein.

After the dissolution, unreacted residues and solid components such the iron powder were separated by filtration, and caustic soda was added to the filtrate to adjust a pH to 9. Residual iron component remaining in the solution was precipitated in the form of hydroxide, and only a lithium component remained in the solution. The precipitate was separated through a filtration, and the solution and ethanol were mixed at a volume ratio of 1:4. The mixture of the solution and ethanol was stirred at room temperature for 30 minutes. A lithium phosphate precipitate (Li$_3$PO$_4$) was generated, and the product was separated through a filtration. Thereafter, the product as washed with ethanol and dried to prepare high purity lithium phosphate as a final product.

Experiment Example

(1) Evaluation on Li concentration in lithium iron phosphate (LiFePO$_4$)

In each Example, a weight percent of lithium ions in lithium iron phosphate (LiFePO$_4$) present in the first electrode before and after the experiment was measured by an ICP-OES.

In Comparative Example, a weight percent of lithium ions in lithium iron phosphate (LiFePO$_4$) before and after the experiment was measured by ICP-OES.

The analyzed results are listed in Table 1 below.

(2) Evaluation on lithium recovery ratio

A lithium recovery ratio is defined by Equation 1 below based on a Li concentration in lithium iron phosphate (LiFePO$_4$).

[Equation 1]

Lithium recovery rate (%)

$= \{$(Li concentration in lithium iron phosphate (LiFePO$_4$) before reaction – Li concentration in lithium iron phosphate (LiFePO$_4$) after reaction) / Li concentration in lithium iron phosphate (LiFePO$_4$) before reaction$\}$

The analyzed results are listed in Table 1 below.

[Table 1]

|  | Li concentration in lithium iron phosphate (LiFePO$_4$) before reaction (wt%) | Li concentration in lithium iron phosphate (LiFePO$_4$) after reaction (wt%) | lithium recovery ratio (%) |
|---|---|---|---|
| Example 1 | 4.5 | 0.7 | 83.3 |
| Example 2 | 4.5 | 0.1 | 97.8 |
| Comparative Example | 4.4 | 1.33 | 69.8 |

Referring to in Table 1, the Li concentration in lithium iron phosphate (LiFePO$_4$) in Examples was explicitly decreased compared to that in Comparative Example.

Based on the above results, it can be confirmed that the lithium precursor was produced with high purity using an electrochemical method.

Additionally, in the lithium precursor recovery, the lithium precursor was recovered without an additional additive such as an oxidizing agent, a reducing agent or a precipitating agent and without an additional separation process.

Accordingly, according to embodiments of the present invention, an eco-friendly lithium precursor recovery was implemented using only an electrical energy. Further, iron phosphate (FePO$_4$) was also recovered from the active material.

**Claims**

1.   A method of recovering a lithium precursor from a cathode active material of a lithium secondary battery, comprising:

   providing a first electrode (112) to include the active material (116), and a second electrode (122);
   immersing the first electrode (112) and the second electrode (122) in a first reaction solution (118) in a first reaction vessel (110) and a second reaction solution (128) in a second reaction vessel (120), respectively; and
   applying a voltage or a current to the first electrode (112) and the second electrode (122) to recover a lithium precursor from the active material (116);
   wherein the first reaction vessel (110) serves as an oxidation unit, and the second reaction vessel (120) serves as a reduction unit;
   wherein the first reaction vessel (110) and the second reaction vessel (120) are connected to each other by a connection portion (130) including an ion exchange membrane (135) therein;
   wherein the first electrode (112) comprises an active material storing portion (114) at one end thereof in which the active material (116) is accommodated; and
   wherein the providing the first electrode (112) includes preparing the first electrode (112) to contain the active material (116) in the active material storing portion (114).

2.   The method of claim 1, wherein the active material storing portion (114) has a pouch shape or a basket shape.

3.   The method of any one of claims 1 to 2, wherein the active material storing portion (114) is formed of a carbon felt.

4.   The method of any one of claims 1 to 3, wherein the first electrode (112) comprises an electrode bar (113) connected to the active material storing portion (114).

5. The method of any one of claims 1 to 4, wherein the first reaction solution (118) comprises a lithium ion-containing aqueous solution, and the second reaction solution (128) includes water or a lithium ion-containing aqueous solution.

6. The method of any one of claims 1 to 5, wherein the ion exchange membrane includes Nafion.

7. The method of any one of claims 1 to 6, wherein the active material (116) comprises lithium iron phosphate, wherein lithium ions separated from the active material (116) move to the second reaction vessel (120) to be collected as lithium hydroxide.

8. A system for recovering a lithium precursor from a cathode active material of a lithium secondary battery, the system comprising:

a first reaction vessel (110) comprising a first reaction solution (118) and a first electrode (112) containing an active material (116) therein immersed in the first reaction solution (118);
a second reaction vessel (120) comprising a second reaction solution (128) and a second electrode (122) immersed in the second reaction solution (128);
a connecting portion (130) connecting the first reaction vessel (110) and the second reaction vessel (120) and including an ion exchange membrane (135) therein; and
a power source (140) configured to apply a voltage to the first electrode (112) and the second electrode (122);
wherein the system is configured such that, when a voltage is applied to the first electrode (112) and the second electrode (122) to recover a lithium precursor from the active material (116), the first electrode (112) acts as an anode and the second electrode (122) acts as a cathode;
wherein the first electrode (112) comprises an active material storing portion (114) at one end thereof in which the active material (116) is accommodated; and wherein the active material (116) comprises lithium iron phosphate.

## Patentansprüche

1. Verfahren zum Rückgewinnen eines Lithiumvorläufers aus einem aktiven Kathodenmaterial einer Lithium-Sekundärbatterie, umfassend:

Bereitstellen einer ersten Elektrode (112), die das aktive Material (116) beinhaltet, und einer zweiten Elektrode (122);
Eintauchen der ersten Elektrode (112) und der zweiten Elektrode (122) in jeweils eine erste Reaktionslösung (118) in einem ersten Reaktionsbehälter (110) und eine zweite Reaktionslösung (128) in einem zweiten Reaktionsbehälter (120); und
Anlegen einer Spannung oder eines Stroms an die erste Elektrode (112) und die zweite Elektrode (122), um einen Lithiumvorläufer aus dem aktiven Material (116) rückzugewinnen;
wobei der erste Reaktionsbehälter (110) als eine Oxidationseinheit und der zweite Reaktionsbehälter (120) als eine Reduktionseinheit dient;
wobei der erste Reaktionsbehälter (110) und der zweite Reaktionsbehälter (120) durch einen Verbindungsabschnitt (130) miteinander verbunden sind, der eine Ionenaustauschmembran (135) darin beinhaltet;
wobei die erste Elektrode (112) an einem ihrer Enden einen aktiven Materialspeicherabschnitt (114) umfasst, in dem das aktive Material (116) untergebracht ist; und
wobei das Bereitstellen der ersten Elektrode (112) das Vorbereiten der ersten Elektrode (112) beinhaltet, um das aktive Material (116) in dem aktiven Materialspeicherabschnitt (114) zu enthalten.

2. Verfahren nach Anspruch 1, wobei der Materialspeicherabschnitt (114) eine Beutelform oder eine Korbform aufweist.

3. Verfahren nach einem der Ansprüche 1 bis 2, wobei der aktive Materialspeicherabschnitt (114) aus einem Kohlenstofffilz ausgebildet ist.

4. Verfahren nach einem der Ansprüche 1 bis 3, wobei die erste Elektrode (112) einen Elektrodenstab (113) umfasst, der mit dem aktiven Materialspeicherabschnitt (114) verbunden ist.

5. Verfahren nach einem der Ansprüche 1 bis 4, wobei die erste Reaktionslösung (118) eine lithiumionenhaltige wässrige Lösung umfasst und die zweite Reaktionslösung (128) Wasser oder eine lithiumionenhaltige wässrige Lösung beinhaltet.

**6.** Verfahren nach einem der Ansprüche 1 bis 5, wobei die Ionenaustauschmembran Nafion beinhaltet.

**7.** Verfahren nach einem der Ansprüche 1 bis 6, wobei das aktive Material (116) Lithiumeisenphosphat umfasst, wobei die Lithiumionen, die von dem aktiven Material (116) abgetrennt sind, in das zweite Reaktionsbehälter (120) wandern, um als Lithiumhydroxid gesammelt zu werden.

**8.** System zum Rückgewinnen eines Lithiumvorläufers aus einem aktiven Kathodenmaterial einer Lithium-Sekundärbatterie, wobei das System Folgendes umfasst:

einen ersten Reaktionsbehälter (110), umfassend eine erste Reaktionslösung (118) und eine erste Elektrode (112), die ein aktives Material (116) darin enthält, das in die erste Reaktionslösung (118) eingetaucht ist;
einen zweiten Reaktionsbehälter (120), umfassend eine zweite Reaktionslösung (128) und eine zweite Elektrode (122), die in die zweite Reaktionslösung (128) eingetaucht ist;
einen Verbindungsabschnitt (130), der den ersten Reaktionsbehälter (110) und den zweiten Reaktionsbehälter (120) miteinander verbindet und eine Ionenaustauschmembran (135) darin beinhaltet; und
eine Energiequelle (140), die so konfiguriert ist, dass sie eine Spannung an die erste Elektrode (112) und die zweite Elektrode (122) anlegt;
wobei das System so konfiguriert ist, dass, wenn eine Spannung an die erste Elektrode (112) und die zweite Elektrode (122) angelegt wird, um einen Lithiumvorläufer aus dem aktiven Material (116) rückzugewinnen, die erste Elektrode (112) als Anode wirkt und die zweite Elektrode (122) als Kathode wirkt;
wobei die erste Elektrode (112) an einem ihrer Enden einen aktiven Materialspeicherabschnitt (114) umfasst, in dem das aktive Material (116) untergebracht ist; und wobei das aktive Material (116) Lithiumeisenphosphat umfasst.

**Revendications**

**1.** Procédé de récupération d'un précurseur de lithium à partir d'une matière active de cathode d'une batterie secondaire au lithium, le procédé comprenant :

l'utilisation d'une première électrode (112) afin de comporter la matière active (116), et d'une seconde électrode (122) ;
l'immersion de la première électrode (112) et de la seconde électrode (122) dans une première solution de réaction (118) dans une première cuve de réaction (110) et dans une seconde solution de réaction (128) dans une seconde cuve de réaction (120), respectivement ; et
l'application d'une tension ou d'un courant à la première électrode (112) et à la seconde électrode (122) afin de récupérer un précurseur de lithium à partir de la matière active (116) ;
dans lequel la première cuve de réaction (110) sert d'unité d'oxydation, et la seconde cuve de réaction (120) sert d'unité de réduction ;
dans lequel la première cuve de réaction (110) et la seconde cuve de réaction (120) sont reliées l'une à l'autre à l'aide d'une partie de liaison (130) renfermant une membrane échangeuse d'ions (135) ;
dans lequel la première électrode (112) comprend une partie (114) de stockage de matière active au niveau de l'une de ses extrémités, dans laquelle la matière active (116) est logée ; et
dans lequel l'utilisation de la première électrode (112) comprend la préparation de la première électrode (112) de façon à contenir la matière active (116) dans la partie (114) de stockage de matière active.

**2.** Le procédé de la revendication 1, dans lequel la partie (114) de stockage de matière active présente une forme de pochette ou une forme de corbeille.

**3.** Le procédé de l'une quelconque des revendications 1 à 2, dans lequel la partie (114) de stockage de matière active est constituée d'un feutre de carbone.

**4.** Le procédé de l'une quelconque des revendications 1 à 3, dans lequel la première électrode (112) comprend une barre (113) d'électrode reliée à la partie (114) de stockage de matière active.

**5.** Le procédé de l'une quelconque des revendications 1 à 4, dans lequel la première solution de réaction (118) comprend une solution aqueuse contenant des ions lithium, et la seconde solution de réaction (128) comprend de l'eau ou une solution aqueuse contenant des ions lithium.

6. Le procédé de l'une quelconque des revendications 1 à 5, dans lequel la membrane échangeuse d'ions comprend du Nafion.

7. Le procédé de l'une quelconque des revendications 1 à 6, dans lequel la matière active (116) comprend du phosphate de lithium-fer, et
dans lequel les ions lithium séparés de la matière active (116) se déplacent vers la seconde cuve de réaction (120) afin d'être collectés sous forme d'hydroxyde de lithium.

8. Système de récupération d'un précurseur de lithium à partir d'une matière active de cathode d'une batterie secondaire au lithium, le système comprenant :

une première cuve de réaction (110) comprenant une première solution de réaction (118) et une première électrode (112), contenant une matière active (116), immergée dans la première solution de réaction (118) ;
une seconde cuve de réaction (120) comprenant une seconde solution de réaction (128) et une seconde électrode (122) immergée dans la seconde solution de réaction (128) ;
une partie de liaison (130) reliant la première cuve de réaction (110) et la seconde cuve de réaction (120) et renfermant une membrane échangeuse d'ions (135) ; et
une source d'alimentation (140) conçue pour appliquer une tension à la première électrode (112) et à la seconde électrode (122) ;
dans lequel le système est conçu de sorte que, lorsqu'une tension est appliquée à la première électrode (112) et à la seconde électrode (122) afin de récupérer un précurseur de lithium à partir de la matière active (116), la première électrode (112) agisse en tant qu'anode et la seconde électrode (122) agisse en tant que cathode ;
dans lequel la première électrode (112) comprend une partie (114) de stockage de matière active au niveau de l'une de ses extrémités, dans laquelle la matière active (116) est logée ; et dans lequel la matière active (116) comprend du phosphate de lithium-fer.

# FIG. 1

# FIG. 2

# FIG. 3

<u>112</u>

115

117

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XU et al.** *Sci. Adv*, 2022, vol. 8, eabq7948

- **PRABAHARAN et al.** *Waste Management*, 2017, vol. 68, 527-533